# EUROPÄISCHE PATENTSCHRIFT

(11) **EP 4 040 034 B1**
(45) Veröffentlichungstag und Bekanntmachung des Hinweises auf die Patenterteilung: **07.06.2023**
(21) Anmeldenummer: 21155211.2
(22) Anmeldetag: 04.02.2021
(51) Int. Cl.: F16P 3/14, G06N 5/00

(54) **SICHERHEITSVORRICHTUNG UND SICHERHEITSVERFAHREN ZUR ÜBERWACHUNG EINER MASCHINE**
SAFETY DEVICE AND SAFETY METHOD FOR MONITORING A MACHINE
DISPOSITIF DE SÉCURITÉ ET PROCÉDÉS DE SÉCURITÉ DESTINÉ À LA SURVEILLANCE D'UNE MACHINE

(43) Veröffentlichungstag der Anmeldung: 10.08.2022
(73) Patentinhaber: SICK AG, 79183 Waldkirch (DE)
(72) Erfinder: Hofmann, Christoph, 79108 Freiburg (DE); Ramachandra, Sanketh, 79183 Waldkirch (DE); Neumann, Thomas, 79227 Schallstadt (DE)

(56) Entgegenhaltungen:
- CH-A5- 588 127
- US-A1- 2020 061 811

## Beschreibung

Die Erfindung betrifft eine Sicherheitsvorrichtung und ein Sicherheitsverfahren zur Überwachung einer Maschine nach dem Oberbegriff von Anspruch 1 beziehungsweise 15.

Die Sicherheitstechnik befasst sich mit dem Personenschutz beziehungsweise der Vermeidung von Unfällen mit Maschinen. Eine gattungsgemäße Sicherheitsvorrichtung nutzt einen oder mehrere Sensoren, um eine Maschine beziehungsweise deren Umgebung zu überwachen und sie bei drohender Gefahr rechtzeitig in einen sicheren Zustand zu versetzen. Eine typische herkömmliche sicherheitstechnische Lösung überwacht mit dem mindestens einen Sensor, etwa mittels eines Laserscanners, ein Schutzfeld, das während des Betriebs der Maschine vom Bedienpersonal nicht betreten werden darf. Erkennt der Sensor einen unzulässigen Schutzfeldeingriff, etwa ein Bein einer Bedienperson, so löst er einen Nothalt der Maschine aus. Es gibt alternative Schutzkonzepte, wie das sogenannte Speed-and-Separation-Monitoring, bei dem die Abstände und Geschwindigkeiten der erfassten Objekte in der Umgebung bewertet und im Gefahrenfalle reagiert wird.

In der Sicherheitstechnik ist eine besondere Verlässlichkeit gefordert, und deshalb sind hohe Sicherheitsanforderungen zu erfüllen, beispielsweise die Norm EN13849 für Maschinensicherheit und die Gerätenorm EN61496 für berührungslos wirkende Schutzeinrichtungen (BWS). Einige typische Maßnahmen dafür sind eine sichere elektronische Auswertung durch redundante, diversitäre Elektronik oder verschiedene Funktionsüberwachungen, etwa die Überwachung der Verschmutzung optischer Bauteile einschließlich einer Frontscheibe. Etwas allgemeiner sind wohldefinierte Fehlerbeherrschungsmaßnahmen nachzuweisen, damit mögliche sicherheitskritische Fehler entlang der Signalkette von dem Sensor über die Auswertung bis zur Einleitung der sicherheitstechnischen Reaktion vermieden oder kontrolliert werden.

Aufgrund der hohen Anforderungen an Hardware und Software in der Sicherheitstechnik werden bislang in erster Linie monolithische Architekturen eingesetzt, mit spezifisch entwickelter Hardware, die Redundanzen und Funktionsüberwachung durch Mehrkanaligkeit und Testmöglichkeiten vorsieht. Entsprechend werden Nachweise korrekter Algorithmen etwa nach IEC TS 62998, IEC-61508-3 geführt, und der Entwicklungsprozess der Software unterliegt permanenten strengen Tests und Überprüfungen. Ein Beispiel hierfür ist ein Sicherheitslaserscanner wie beispielsweise erstmals aus DE 43 40 756 A1 bekannt und in seinen Grundzügen bis heute weit verbreitet eingesetzt. Dort ist die gesamte Auswertungsfunktionalität integriert, einschließlich der Lichtlaufzeitmessung zur Abstandsbestimmung und der Objekterfassung in konfigurierten Schutzfeldern. Das Ergebnis ist ein fertig ausgewertetes binäres Absicherungssignal an einem zweikanaligen Ausgang (OSSD, Output Signal Switching Device) des Laserscanners, das im Falle eines Schutzfeldeingriffs die Maschine stoppt. Auch wenn sich dieses Konzept bewährt hat, bleibt es unflexibel, da Änderungen praktisch nur durch Neuentwicklung eines Nachfolgemodells des Laserscanners möglich sind.

Die CH 588 127 A5 offenbart eine Schaltungsanordnung zum Feststellen der Anwesenheit von Gegenständen in einem Raum, die in Verbindung mit Maschinen eingesetzt werden kann, um eine Warnung oder eine Unterbrechung des Maschinenbetriebs zu erbringen, wenn eine gefährliche Betriebsbedingung herrscht. Die Schaltungsanordnung weist eine Selbstprüfeinrichtung auf, die bei einem simulierten Eindringsignal die Zustände der Steuermittel bei einem echten Eindringsignal erwartet. Dies basiert auf Hardwarebausteinen wie Differentialverstärkern, Brückenschaltungen und Flip-Flops.

In einigen herkömmlichen Sicherheitsanwendungen wird zumindest ein Teil der Auswertung aus dem Sensor in eine programmierbare Steuerung ausgelagert (SPS, Speicherprogrammierbare Steuerung). Dafür sind aber besondere Sicherheitssteuerungen erforderlich, die selbst zur Fehlervermeidung und -aufdeckung mehrkanalige Strukturen und dergleichen aufweisen. Sie sind daher kostenaufwändig und bieten vergleichsweise wenig Speicher- und Rechenkapazitäten, die beispielsweise mit einer 3D-Bildverarbeitung völlig überfordert sind.

Die Verwendung von Standardsteuerungen wäre zwar unter Einbettung in die notwendigen Funktionsüberwachungen grundsätzlich denkbar, jedoch wird dies heutzutage im industriellen Umfeld kaum angewandt, da es aufwändigere Architekturen und Expertenwissen verlangt. Im Übrigen sind auch Standardsteuerungen oder SPS nur mit bestimmten Sprachen bei zum Teil sehr limitierendem Sprachraum programmierbar. Schon verhältnismäßig einfache Funktionsblöcke bedürfen erheblicher Entwicklungsaufwände und Laufzeitressourcen, so dass deren Implementierung in einer Standardsteuerung, erst recht unter Sicherheitsmaßnahmen wie Redundanzen, bei etwas komplexeren Anwendungen kaum realisierbar sind.

Die EP 3 709 106 A1 kombiniert in einem Sicherheitssystem eine Sicherheitssteuerung mit einer Standardsteuerung. Aufwändigere Berechnungen bleiben der Standardsteuerung überlassen, und deren Ergebnisse werden durch die Sicherheitssteuerung validiert. Die Sicherheitssteuerung greift aber dafür auf vorhandene sichere Daten eines sicheren Sensors zurück, was die möglichen Anwendungsszenarien einschränkt und zudem wiederum Expertenwissen fordert, um geeignete sichere Daten zu gewinnen und damit geeignet zu validieren. Zudem ist die Hardwarestruktur weiterhin fest vorgegeben und die Anwendung speziell darauf fest implementiert.

In vielen Fällen wäre es erwünscht, die Sicherheitsüberwachung mit einer Automatisierungsaufgabe zu kombinieren. So werden nicht nur Unfälle vermieden, sondern die eigentliche Aufgabe der Maschine wird ebenfalls automatisiert unterstützt. Bisher sind dafür aber meist völlig unterschiedliche Systeme und Sensoren im Einsatz. Das liegt unter anderem daran, dass ein Sicherheitssensor für eine Automatisierungsaufgabe viel zu teuer ist und umgekehrt die Komplexität eines Sicherheitssensors nicht durch weitere Funktionen überladen werden soll. Die EP 2 053 538 B1 erlaubt für eine 3D-Kamera die Definition von separaten Sicherheits- und Automatisierungsbereichen. Das ist aber nur ein erster Schritt, da zwar immerhin derselbe Sensor für die beiden Welten Sicherheit und Automatisierung verwendet wird, diese beiden Aufgaben dann aber doch räumlich und implementierungsseitig wieder eindeutig voneinander trennt. Die IEC 62998 ermöglicht die Koexistenz von Sicherheits- und Automatisierungsdaten, macht aber als Norm keinerlei konkrete Implementierungsvorschläge.

Außerhalb der Sicherheitstechnik gibt es längst sehr viel flexiblere Architekturen. Der monolithische Ansatz ist dort seit langem in mehreren Schritten moderneren Konzepten gewichen. Die frühere traditionelle Verteilung (Deployment) mit fester Hardware, auf der ein Betriebssystem die einzelnen Anwendungen koordiniert, hat zwar weiterhin ihre Berechtigung in Standalone-Geräten, genügt aber in einer vernetzten Welt längst nicht mehr. Der Grundgedanke in der Weiterentwicklung war das Einziehen von zusätzlichen Schichten, die von der konkreten Hardware immer weiter abstrahieren.

Ein erster Schritt sind die sogenannten virtuellen Maschinen, wo die zusätzliche Schicht als Hypervisor oder Virtual Machine Monitor bezeichnet ist. Solche Ansätze werden inzwischen auch zaghaft in der Sicherheitstechnik verfolgt. So bietet etwa die EP 3 179 278 B1 in einem Sicherheitssensor eine geschützte Umgebung an, um dem Anwender zu erlauben, eigene Programmbausteine auf dem Sicherheitssensor ablaufen zu lassen. Solche Programmbausteine sind dann aber sorgfältig von der Sicherheitsfunktionalität getrennt und tragen dazu nichts bei.

Eine weitergehende Abstraktion basiert auf sogenannten Containern (Containervirtualisierung, Containering). Ein Container ist quasi eine kleine virtuelle Kapsel für eine Softwareanwendung, die eine vollständige Umgebung für deren Ablauf einschließlich Speicherbereichen, Bibliotheken und dergleichen bietet. Die zugehörige abstrahierende Schicht oder Laufzeitumgebung wird container runtime genannt. Damit kann die Softwareanwendung unabhängig von der praktisch beliebigen Hardware entwickelt werden, auf der sie später abläuft. Container werden häufig mit Hilfe von Docker umgesetzt.

In einer modernen loT-Architektur (Internet of Things, Industrial Internet of Things) wird eine Vielzahl von Containern mit unterschiedlichsten Softwareanwendungen zusammengeführt. Diese Container müssen geeignet koordiniert werden, was in diesem Zusammenhang als Orchestrieren bezeichnet wird und wofür ein sogenannter orchestration layer als weitere Abstraktion hinzukommt. Für die Container-Orchestrierung sind unter anderem Docker Swarm als Erweiterung von Docker sowie Kubernetes, rkt oder LXC bekannt.

Der Einsatz solcher modernen, abstrahierenden Architekturen in der Sicherheitstechnik scheitert bislang an den hohen Hürden der Sicherheitsnormen und der entsprechend konservativen Herangehensweise im Anwendungsfeld der funktionalen Sicherheit. Allgemein im industriellen Umfeld werden Containertechnologien durchaus verfolgt, und beispielsweise in der Automobilindustrie gibt es Pläne für den Einsatz von Kubernetes-Architekturen, und auch die Luftwaffe verfolgt derlei Ansätze. Dies alles zielt aber nicht auf die funktionale Sicherheit und löst somit die genannten Probleme nicht.

Zwar ist eine hohe Verfügbarkeit auch in einer üblichen loT-Welt erwünscht, aber diese Form der Ausfallsicherheit ist längst noch nicht mit dem vergleichbar, was die Sicherheitsnormen fordern. Für den Sicherheitstechniker sind daher Edge- oder Cloudanwendungen für eine normgerechte Sicherheit bisher undenkbar. Es widerspricht dem verbreiteten Denken, für reproduzierbare Bedingungen zu sorgen und sich gegen alle unter diesen Bedingungen vorstellbaren Möglichkeiten einer Fehlfunktion zu wappnen. Eine weitgehende Abstraktion oder Virtualisierung schafft eine zusätzliche Ungewissheit, die bislang mit den Sicherheitsanforderungen unvereinbar erscheint.

Es ist daher Aufgabe der Erfindung, die Flexibilität von Sicherheitsanwendungen zu erhöhen.

Diese Aufgabe wird durch eine Sicherheitsvorrichtung und ein Sicherheitsverfahren zur Überwachung einer Maschine nach Anspruch 1 beziehungsweise 15 gelöst. Die Begriffe Sicherheit oder sicher sind im Rahmen dieser Beschreibung im Sinne einer Sicherheitsnorm zu verstehen. Die Sicherheitsvorrichtung erfüllt demnach eine Sicherheitsnorm beispielsweise für Maschinensicherheit, berührungslos wirkende Schutzeinrichtungen oder Unfallvermeidung im Personenschutz, oder sie ist nochmals etwas anders formuliert in der Lage, durch Normen definierte Sicherheitsniveaus einzuhalten, es werden folglich jeweils Fehler bis zu einem in der Sicherheitsnorm spezifizierten Sicherheitsniveau beherrscht. Einleitend sind einige Beispiele solcher Sicherheitsnormen genannt, wo die Sicherheitsniveaus beispielsweise als Schutzklassen oder Performance Level bezeichnet sind. Die Erfindung ist nicht auf eine bestimmte dieser Sicherheitsnormen festgelegt, die sich in ihrer konkreten Nummerierung und Formulierung regional und im Laufe der Zeit ändern können, nicht aber in ihren grundlegenden Prinzipien zur Schaffung von Sicherheit.

Immer wieder werden in dieser Beschreibung "mindestens eine" Einheit oder sonstige Komponente der Sicherheitsvorrichtung angesprochen. Das bedeutet, dass es eine oder mehrere dieser Einheiten geben kann, und nicht immer wird das sprachlich sauber unterschieden. Wenn an einer Stelle eine Einheit eingeführt wird und an einer späteren Stelle nochmals eine entsprechende Einheit ausgestaltet wird, kann es sich sowohl um dieselbe Einheit wie eine weitere Einheit desselben Typs handeln. Wenn mindestens eine Einheit bestimmte Eigenschaften hat, gilt das für eine einzige Einheit, mehrere Einheiten oder alle Einheiten des jeweiligen Typs.

Die überwachte oder abzusichernde Maschine ist zunächst allgemein zu verstehen, es handelt sich beispielsweise um eine Bearbeitungsmaschine, eine Fertigungsstraße, eine Sortieranlage, eine Prozessanlage, einen Roboter oder ein Fahrzeug in zahlreichen Spielarten, wie schienengebunden oder nicht, geführt oder fahrerlos und dergleichen. Mindestens ein Sensor liefert Sensordaten zu der Maschine, d.h. Daten über die Maschine selbst, über das, mit dem sie interagiert, oder über deren Umgebung. Die Sensordaten sind zumindest teilweise sicherheitsrelevant, zusätzliche nicht sicherheitsrelevante Sensordaten für Automatisierungs- oder Komfortfunktionen sind denkbar. Die Sensoren können, müssen aber keine sicheren Sensoren sein, die Sicherheit kann erst nachgelagert gewährleistet werden.

Eine Verarbeitungseinheit fungiert als Ausführungsumgebung. Die Verarbeitungseinheit ist somit das strukturelle Element, die Ausführungsumgebung dessen Funktion. Die Verarbeitungseinheit ist mindestens mittelbar mit dem Sensor und der Maschine verbunden. Sie hat demnach Zugriff auf die Sensordaten für deren Verarbeitung, möglicherweise indirekt über zwischengeschaltete weitere Einheiten, und kann mit der Maschine kommunizieren und insbesondere auf sie einwirken, vorzugsweise über eine Maschinensteuerung der Maschine. Die Verarbeitungseinheit oder Ausführungsumgebung bezeichnet als Sammelbegriff die Hardware und Software, mit der anhand der Sensordaten über das Erfordernis und vorzugsweise auch Art einer sicherheitsgerichteten Reaktion der Maschine entschieden wird.

Die Verarbeitungseinheit umfasst mindestens einen Rechenknoten. Das ist eine digitale Rechenvorrichtung beziehungsweise ein Hardwareknoten oder ein Teil davon, der Rechen- und Speicherkapazitäten zum Ausführen eines Softwarefunktionsblocks zur Verfügung stellt. Allerdings muss nicht jeder Rechenknoten zwangsläufig ein separater Hardwarebaustein sein, es können beispielsweise durch Verwendung von Multiprozessoren mehrere Rechenknoten auf demselben Gerät realisiert sein, und umgekehrt kann ein Rechenknoten unterschiedliche Hardwareressourcen bündeln.

Auf dem Rechenknoten oder einem der Rechenknoten läuft im Betrieb der Sicherheitsvorrichtung mindestens eine Logikeinheit ab. Die Logikeinheit bezeichnet demnach allgemein einen Softwarefunktionsblock. Erfindungsgemäß ist mindestens eine Logikeinheit als Sicherheitsfunktionseinheit ausgebildet, die eine sicherheitsgerichtete Auswertung der Sensordaten leistet, somit für den Personenschutz beziehungsweise eine Unfallvermeidung anhand der Sensordaten feststellt, ob eine Gefahr droht, also ein sicherheitsrelevantes Ereignis erkannt wurde. Das ist beispielsweise der Fall bei Erfassung einer Person zu nahe an der Maschine oder in einem Schutzfeld, aber auch bei einem Eigenfehler des Sensors oder der Verarbeitungseinheit, der sicherheitsrelevant ist und die sichere Funktion nicht mehr garantieren lässt.

Im Falle eines sicherheitsrelevanten Ereignisses wird ein Sicherheitssignal an die Maschine ausgegeben, um dort eine sicherheitsgerichtete Reaktion auszulösen, mit der die Maschine in einen sicheren Zustand versetzt wird, der die Gefahr beseitigt oder wenigstens auf ein hinnehmbares Niveau absenkt. Je nach Situation besteht die Reaktion beispielsweise in einem Verlangsamen, einem besonderen Arbeitsmodus der Maschine, einem Ausweichen oder einem Anhalten.

Die Erfindung geht von dem Grundgedanken aus, dass sich die Verarbeitungseinheit oder Ausführungsumgebung an eine gegebene Hardwarelandschaft anpasst. Die zur Verfügung gestellte Hardware wird in Rechenknoten unterteilt, denen Logikeinheiten zugewiesen werden, und die Ausführungsumgebung kümmert sich um den Ablauf. Das geschieht vorzugsweise nicht nur einmalig, sondern auch dynamisch während des Betriebs. Die Verarbeitungseinheit ist in der Lage, Logikeinheiten zu erzeugen, aufzulösen und einem Rechenknoten zuzuweisen beziehungsweise sie zwischen Rechenknoten zu verschieben. Dies betrifft ganz ausdrücklich auch die sicherheitsrelevanten Logikeinheiten, also Sicherheitsfunktionseinheiten sowie und die noch vorzustellenden Diagnoseeinheiten. Die Verknüpfung zwischen Hardware und Auswertung wird damit unter Wahrung der funktionalen Sicherheit fließend. Die Sicherheitsvorrichtung erhält damit vorzugsweise eine zusätzliche Abstraktionsschicht zum Koordinieren oder Orchestrieren von Anwendungen, insbesondere Containern (orchestration layer).

Das ist radikal anders als herkömmlich in der Sicherheitstechnik. Dort wird eine feste Hardwarestruktur vorgegeben, meist eigens für genau diese Sicherheitsfunktion entwickelt, und die Softwarefunktionalität ist für genau diese Hardwarestruktur entwickelt, dort fest implementiert und getestet. Eine nachträgliche Veränderung der Softwareverteilung (deployment) ist ausgeschlossen, und das gilt erst recht durch eine Veränderung der zugrundeliegenden Hardware. Derartige Modifikationen erfordern herkömmlich zumindest einen aufwändigen Umbau durch einen Sicherheitsexperten, in der Regel eine komplette Neuentwicklung. Ein Ausfluss der typischen konservativen Herangehensweise in der Industrie und erst Recht in der Sicherheitstechnik ist, dass selbst Firmware- oder Softwareupdates von Sensoren und Steuerungen äußerstenfalls in langen Zyklen und typischerweise gar nicht vorgenommen werden.

Die Erfindung hat den Vorteil, dass erstmals eine Sicherheitsarchitektur vorgestellt wird, die in einem industriellen Umfeld (Industrial Internet of Things, IIoT) sicherheitsrelevante Anwendungen koordiniert oder orchestriert. Grundsätzlich erlaubt die Sicherheitsnorm ISO 13849 die Verwendung von Standardsteuerungen für Sicherheitsanwendungen, aber die dafür erforderlichen Zusatzmaßnahmen sind erst mit den hier vorgestellten Überlegungen in den Griff zu bekommen. Durch die Erfindung lässt sich ein gewünschtes Sicherheitsniveau garantieren und sogar erhöhen. Die Hardware- wie Softwareentwicklung wird entlastet, da Redundanz und Diversität erfindungsgemäß sehr einfach hergestellt werden kann und dies manchen bisher individuell entwickelten Funktionstest oder eine mühsam durch Spezialhardware erreichte Mehrkanaligkeit und Diversität ersetzt. Außerdem ist die Robustheit erheblich erhöht, weil Logikeinheiten auf unterschiedlicher Hardware implementiert und zwischen Rechenknoten verschoben werden können. Schließlich bietet die Erfindung ganz neue Möglichkeiten, die traditionelle Sicherheit im Sinne von Personenschutz (safety) gemeinsam mit der Datensicherheit und -integrität (Cyber Security) zu verwirklichen.

Mindestens eine Logikeinheit ist bevorzugt als Diagnoseeinheit ("Watchdog") ausgebildet, die eine Sicherheitsfunktionseinheit testet oder überwacht. Diagnoseeinheiten bilden mit den Sicherheitsfunktionseinheiten die sicherheitsrelevanten Logikeinheiten. Eine Diagnoseeinheit überwacht oder testet eine Sicherheitsfunktionseinheit anhand von deren Auswertungsergebnis, insbesondere eines Auswertungsergebnisses, das in Reaktion auf spezifische, künstliche Testsensordaten erzeugt wird. Die Diagnoseeinheit benötigt keinerlei spezielles Wissen, wie oder mit welchem Algorithmus eine Sicherheitsfunktionseinheit arbeitet, sondern lediglich eine Erwartungshaltung für Auswertungsergebnisse bei korrektem Arbeiten. Diagnoseeinheiten und Sicherheitsfunktionseinheiten sind einander nur vorzugsweise eins zu eins zugeordnet, es kann auch eine Sicherheitsfunktionseinheit von mehreren untereinander gleichartigen oder verschiedenen Diagnoseeinheiten überwacht oder eine Diagnoseeinheit für mehrere untereinander gleichartigen oder verschiedenen Sicherheitsfunktionseinheiten zuständig sein. Auch ist denkbar, dass dieselbe Logikeinheit die Funktionalität sowohl einer Sicherheitsfunktionseinheit als auch eine Diagnoseeinheit umfasst, insbesondere wenn zwei Kopien einer solchen Logikeinheit redundant arbeiten und einander gegenseitig anhand der Auswertungsergebnisse überprüfen.

Die Ausführungsumgebung weist bevorzugt mindestens eine Mastereinheit auf, die mit den Rechenknoten kommuniziert und sie koordiniert. Die Mastereinheit kann für Redundanz und/oder verteilte Zuständigkeit auch mehrere Untereinheiten aufweisen oder von Knotenmanagereinheiten der Rechenknoten unterstützt werden und auf einem eigenen Rechenknoten oder einem Rechenknoten gemeinsam mit Logikeinheiten implementiert sein.

Die Ausführungsumgebung ist bevorzugt dafür ausgebildet zu prüfen, ob eine Logikeinheit noch arbeitet. Diese Überprüfung beschränkt sich im Wesentlichen darauf, ein Lebenszeichen zu erhalten, ob eine Logikeinheit überhaupt noch arbeitet und mit den zugewiesenen Ressourcen auskommt. Das ist nicht zu verwechseln mit der Funktionalität einer Diagnoseeinheit, die ganz spezifisch Fehler in einer bestimmten Sicherheitsfunktionseinheit aufdeckt.

Die Ausführungsumgebung ist bevorzugt dafür ausgebildet, die einer Logikeinheit zugewiesenen Ressourcen zu verändern. Dies kann die Logikeinheit bei einer schnelleren Verarbeitung unterstützen, aber auch Ressourcen für andere Logikeinheiten freistellen. Besondere Möglichkeiten, um mehr Ressourcen bereitzustellen, sind die Verschiebung einer Logikeinheit auf einen anderen Rechenknoten oder die Erzeugung einer weiteren Instanz oder Kopie der Logikeinheit, wobei eine Logikeinheit für letzteres bevorzugt für eine parallelisierbare Ausführung ausgebildet ist.

Die Ausführungsumgebung hält bevorzugt eine Konfigurationsinformation oder Konfigurationsdatei über die Logikeinheiten gespeichert. Anhand der Konfigurationsinformation wird Buch über die vorhandenen Logikeinheiten geführt beziehungsweise vorgegeben, welche Logikeinheiten in welchem Zeitablauf und mit welchen Ressourcen ausgeführt werden sollen und wie sie möglicherweise miteinander in Beziehung stehen, so dass eine Diagnoseeinheit in der vorgesehenen Weise über eine Sicherheitsfunktionseinheit wachen kann.

Die Konfigurationsinformation ist besonders bevorzugt mittels Signaturen oder Blockchain-Datensätzen gegen Manipulation gesichert. Eine solche Manipulation kann absichtlich oder unabsichtlich sein, jedenfalls sollte sich in einer Sicherheitsanwendung die Konfiguration der Logikdateien keinesfalls unbemerkt verändern.

Der mindestens eine Rechenknoten weist bevorzugt eine Knotenmanagereinheit zur Kommunikation mit anderen Rechenknoten und der Ausführungsumgebung auf. Diese Knotenmanagereinheit ist für die Verwaltung und Koordinaten des zugehörigen Rechenknotens, insbesondere die Logikeinheiten dieses Rechenknotens, sowie für das Zusammenspiel mit den anderen Rechenknoten und der Mastereinheit verantwortlich. Sie kann in praktisch beliebiger Verteilung auch Aufgaben der Mastereinheit übernehmen.

Der mindestens eine Rechenknoten weist bevorzugt mindestens einen Unterknoten auf, und die Logikeinheiten sind einem Unterknoten zugeordnet. Damit werden die Rechenknoten ein weiteres Mal in sich strukturiert, um Logikeinheiten in einem Unterknoten zusammenzufassen.

Die mindestens eine Logikeinheit ist bevorzugt als Container implementiert. Damit sind die Logikeinheiten abgekapselt oder containerisiert und werden auf nahezu beliebiger Hardware lauffähig. Der sonst übliche enge Zusammenhang zwischen Sicherheitsfunktion und deren Implementierung auf fester Hardware ist aufgebrochen, womit sich die Flexibilität und Prozessstabilität ganz erheblich erhöht. Die Ausführungsumgebung koordiniert oder orchestriert die Container mit den darin befindlichen Logikeinheiten untereinander. Es gibt mindestens zwei Abstraktionsschichten, einmal eine jeweilige Containerschicht (container runtime) und zum zweiten eine darüber liegende Orchestrierungsschicht (orchestration layer) der Ausführungsumgebung.

Die Ausführungsumgebung ist bevorzugt auf mindestens einem Sensor, einer speicherprogrammierbaren Steuerung, einer Maschinensteuerung, einer Rechnervorrichtung in einem lokalen Netzwerk, einem Edge-Device und/oder in einer Cloud implementiert. Die zugrundeliegende Hardwarelandschaft ist mit anderen Worten praktisch beliebig, was ein ganz großer Vorteil des erfindungsgemäßen Ansatzes ist. Die Ausführungsumgebung arbeitet abstrakt mit Rechenknoten, die darunterliegende Hardware kann sich sehr heterogen zusammensetzen. Insbesondere werden der Sicherheitstechnik auch Edge- oder Cloud-Architekturen zugänglich, ohne dabei auf die vertraute Auswertungshardware von (sicheren) Sensoren oder Steuerungen verzichten zu müssen.

Die Ausführungsumgebung ist bevorzugt dafür ausgebildet, Rechenknoten einzubinden und/oder auszuschließen. Die Hardwareumgebung darf sich damit ändern, die Ausführungsumgebung ist in der Lage, damit umzugehen und neue oder angepasste Rechenknoten zu bilden. Es ist demnach möglich, neue Hardware anzuschließen oder Hardware auszutauschen, insbesondere zum Ersatz bei (Teil-)ausfall sowie zum Aufrüsten und zur Bereitstellung zusätzlicher Rechen- und Speicherressourcen. Die Logikeinheiten können auf den von der Ausführungsumgebung abstrahierten Rechenknoten trotz einer möglicherweise auch rabiat veränderten Hardwarekonfiguration weiterarbeiten.

Die Ausführungsumgebung ist bevorzugt dafür ausgebildet, eine sicherheitsrelevante Logikeinheit zur Laufzeit dynamisch zu erzeugen, aufzulösen und/oder einem Rechenknoten zuzuweisen. Sicherheitsrelevante Logikeinheiten sind Sicherheitsfunktionseinheiten und Diagnoseeinheiten. Herkömmlich werden sämtliche Sicherheitsfunktionen fest und unveränderlich auf dedizierter Hardware implementiert. Eine Veränderung, soweit überhaupt ohne Umbau oder Neuentwicklung darstellbar, würde als völlig unverträglich mit dem zugrundeliegenden Sicherheitskonzept angesehen. Das gilt schon für eine einmalige Implementierung und erst recht dynamische Änderungen zur Laufzeit. Im Gegenteil wird stets alles daran gesetzt, mit durchaus großem Aufwand und zahlreichen komplexen Einzelmaßnahmen, dass die Sicherheitsfunktion anfangs wie über die gesamte Betriebszeit eine wohldefinierte und unveränderte Umgebung vorfindet.

Vorteilhafterweise ist eine Sicherheitsfunktionseinheit dafür ausgebildet, dynamisch ein erforderliches oder erreichbares Sicherheitsniveau für die Sicherheitsvorrichtung zu bestimmen. Die Bestimmung eines erforderlichen Sicherheitsniveaus kann im Rahmen einer verhaltensgetriebenen Risikoanalyse erfolgen (BDRA, Behavior driven risk assessment). Dabei wird einer Sicherheitsvorrichtung nicht länger ein fixes Sicherheitsniveau zugewiesen, sondern situativ entschieden, welches Sicherheitsniveau gerade jetzt erforderlich ist. Das entscheidet die Sicherheitsfunktionseinheit anhand der Sensordaten und gegebenenfalls weiterer Daten, etwa einem von einer Maschinensteuerung kommunizierten Arbeitsmodus. Umgekehrt ist auch denkbar, dass die Sicherheitsfunktionseinheit feststellt, welches Sicherheitsniveau die Sicherheitsvorrichtung in ihrer derzeitigen Konfiguration zur Verfügung stellt. Das erzwingt natürlich dann, wenn dieses erreichbare Sicherheitsniveau niedriger ausfällt als das erforderliche Sicherheitsniveau, eine sicherheitsgerichtete Reaktion, die aber womöglich milder ausfällt als ein sofortiger Nothalt. Mit dem erreichbaren Sicherheitsniveau sind beispielsweise bestimmte Arbeitsmodi wie eine langsamere Roboterbewegung oder eine Schleichfahrt eines Fahrzeugs noch zulässig, so dass zumindest eine gewisse Produktivität noch aufrechterhalten werden kann.

Die Ausführungsumgebung ist bevorzugt dafür ausgebildet, das Sicherheitsniveau der Sicherheitsvorrichtung dynamisch durch mindestens eine der Maßnahmen Änderung von Testzyklen, Änderung von Redundanz und/oder Änderung von Diversität anzupassen. Das neu erreichte Sicherheitsniveau kann von außen vorgegeben oder wie im Vorabsatz beschrieben dynamisch bestimmt worden sein. Es gibt verschiedene Stellschrauben zur Anpassung des Sicherheitsniveaus, nämlich erstens die Länge von Testzyklen, nach denen Tests wiederholt werden, oder etwas allgemeiner die Zeitpunkte, zu denen eine Diagnoseeinheit eine Sicherheitsfunktionseinheit testet oder überwacht, zweitens die Vielfachheit einer Redundanz oder die Anzahl der für die Ausführung einer Sicherheitsfunktion zuständigen Logikeinheiten und/oder drittens die Diversität, die durch Implementierung von für eine Sicherheitsfunktion zuständigen Logikeinheit auf gleichen oder unterschiedlichen Unterknoten oder Rechenknoten entsteht. Das Sicherheitsniveau wird mittels mindestens einer dieser Stellschrauben geändert. Eine weitere denkbare Stellschraube tausch für bestimmte Aufgaben zuständige Logikmodule aus, etwa eine einfache Sicherheitsfunktionseinheit oder Diagnoseeinheit gegen eine komplexe Sicherheitsfunktionseinheit beziehungsweise Diagnoseeinheit oder umgekehrt.

Testzyklen können lang oder kurz sein. Das wird wahlweise durch Zeiten vorgegeben, etwa ein Test alle x Millisekunden, oder an den Messzyklen des Sensors beziehungsweise den Auswertungszyklen der Sensordaten festgemacht. Es können m Testzyklen für n Mess- oder Auswertungszyklen festgelegt sein, und das Verhältnis m:n mit typischerweise m>n bis hin zu m=n=1 legt die gewünschte Häufigkeit fest. Denkbar ist auch ein sogenannter Test vor Anforderung, der weniger in regelmäßigen Zyklen, sondern eher ereignisbasiert abläuft.

Eine Redundanz kann gar nicht vorgesehen sein, oder es werden zwei oder mehr Kopien oder Instanzen von sicherheitsrelevanten Logikeinheiten erzeugt. Das ergibt dann effektiv eine entsprechende Mehrkanaligkeit der Auswertung.

Diversität entsteht, wenn redundante Logikeinheiten oder auch nur eine Sicherheitsfunktionseinheit und ihre zugehörige Diagnoseeinheit auf unterschiedlichen Unterknoten oder vorzugsweise unterschiedlichen Rechenknoten implementiert werden. Dabei wird die Diversität umso größer, auf je mehr Unter- oder Rechenknoten sich die Logikeinheiten verteilen. Es handelt sich hier um eine spezielle Form der Diversität, die sich vor allem an der Hardware festmacht. Um überhaupt auf der unterschiedlichen Hardware lauffähig zu sein, unterscheidet sich natürlich auch die Software, aber diese Unterschiede sind erfindungsgemäß von der eigentlichen Logikeinheit abstrahiert oder abgekapselt und werden von der Ausführungsumgebung und insbesondere deren Containerbeziehungsweise Orchestrierungsschicht getragen. Dennoch können durchaus auch solche Softwareunterschiede zu einer nützlichen Diversität beitragen. Darüber hinaus könnte noch mehr Diversität durch unterschiedliche Implementierungen oder gar Algorithmen innerhalb der Logikeinheiten geschaffen werden. Das ist zwar vorteilhaft mit der Erfindung kombinierbar, kann aber die Ausführungsumgebung selbst nicht leisten, das liegt in der Verantwortung der individuellen Programmierung von Logikeinheiten. Eine gewisse zusätzliche Diversität könnte noch die Verwendung unterschiedlicher Compiler und dergleichen automatisierbare Variation schaffen.

Die Ausführungsumgebung ist bevorzugt dafür ausgebildet, das Sicherheitsniveau der Sicherheitsvorrichtung einzustellen auf:
- niedrig: eine Sicherheitsfunktion ist nur einfach in einer sicherheitsrelevanten Logikeinheit implementiert, eine Diagnose erfolgt nur mit jedem n-ten Sensorzyklus oder vor Anforderung,
- mittel: eine Sicherheitsfunktion ist nur einfach in einer sicherheitsrelevanten Logikeinheit implementiert, eine Diagnose erfolgt in kurzen Zyklen, insbesondere mit jedem Sensorzyklus,
- hoch: eine Sicherheitsfunktion ist redundant in zwei sicherheitsrelevanten Logikeinheiten implementiert, eine Diagnose erfolgt in kurzen Zyklen, insbesondere mit jedem Sensorzyklus, und die Diagnosen werden verglichen oder
- sehr hoch: eine Sicherheitsfunktion ist redundant in mindestens drei sicherheitsrelevanten Logikeinheiten implementiert, eine Diagnose erfolgt in kurzen Zyklen, insbesondere mit jedem Sensorzyklus, und die Diagnosen werden verglichen.

Für ein niedriges und mittleres Sicherheitsniveau wird somit auf Redundanz ganz verzichtet, und es wird nur die Häufigkeit der Tests angepasst, oder auch deren Komplexität. Bei einem hohen Sicherheitsniveau kommt eine zweikanalige Redundanz mit gegenseitige Diagnose hinzu, bei einem sehr hohen Sicherheitsniveau sogar eine noch höhere Redundanz. Darüber hinaus könnte eine Diversität durch Zuweisung auf verschiedene Unterknoten oder Rechenknoten erreicht werden. Dies ist ein Beispielkatalog für eine konkrete Verwendung der vorgestellten drei Stellschrauben Testzyklen, Redundanz und Diversität zum Erreichen verschiedener Sicherheitsniveaus. Es sind feinere, grobere und andere Abstufungen der Sicherheitsniveaus denkbar, insbesondere durch andere Kombinationen der jeweiligen Verwendung einer Stellschraube. So kann beispielsweise eine hohe Redundanz und/oder Diversität durchaus auch mit langsamen Testzyklen kombiniert werden.

Mindestens eine Logikeinheit ist bevorzugt als Automatisierungseinheit ausgebildet, die aus den Sensordaten eine für eine Automatisierungsaufgabe relevante Information und/oder einen Steuerungsbefehl für die Maschine erzeugt, wobei Information und Steuerungsbefehl nicht sicherheitsrelevant sind. Die Ausführungsumgebung unterstützt somit eine weitere Art von Logikeinheit, die anhand der Sensordaten nicht sicherheitsrelevante Zusatzfunktionen bietet. Es geht bei solchen Automatisierungsaufgaben nicht um den Personenschutz oder die Unfallvermeidung, und demgemäß müssen insoweit keine Sicherheitsnormen erfüllt werden. Typische Automatisierungsaufgaben sind Qualitäts- und Ablaufkontrollen, Objekterkennung zum Greifen, Sortieren oder für sonstige Bearbeitungsschritte, Klassifikationen und dergleichen. Auch eine Automatisierungseinheit profitiert davon, wenn die Ausführungsumgebung ihr flexibel Ressourcen zuweist und sie daraufhin überwacht, ob sie ihre Aufgabe noch ausführt, und beispielsweise gegebenenfalls die entsprechende Logikeinheit neu startet, auf einen anderen Rechenknoten schiebt oder eine Kopie der Logikeinheit ins Leben ruft. Dabei geht es dann aber um Verfügbarkeit mit Vermeidung von Stillständen und der Unterstützung ordnungsgemäßer Abläufe, die für den Betreiber der Maschine durchaus sehr relevant sind, aber nichts mit Sicherheit zu tun haben.

Der mindestens eine Sensor ist bevorzugt als optoelektronischer Sensor, insbesondere Lichtschranke, Lichttaster, Lichtgitter, Laserscanner, FMCW-LIDAR oder Kamera, als Ultraschallsensor, Trägheitssensor, kapazitiver Sensor, magnetischer Sensor, induktiver Sensor, UWB-Sensor oder als Prozessgrößensensor ausgebildet ist, insbesondere Temperatur-, Durchfluss-, Füllstand- oder Drucksensor, wobei die Sicherheitsvorrichtung insbesondere eine Vielzahl gleicher oder unterschiedlicher Sensoren aufweist. Dies sind einige Beispiele für Sensoren, die für eine Sicherheitsanwendung relevante Sensordaten liefern können. Die konkrete Auswahl des Sensors oder der Sensoren hängt von der jeweiligen Sicherheitsanwendung ab. Die Sensoren können bereits selbst als Sicherheitssensoren ausgebildet sein. Es ist aber erfindungsgemäß ausdrücklich alternativ vorgesehen, die Sicherheit erst nachgelagert durch Tests, zusätzliche Sensorik beziehungsweise (diversitäre) Redundanz oder Mehrkanaligkeit und dergleichen zu erzielen sowie sichere und nicht sichere Sensoren gleicher oder unterschiedlicher Sensorprinzipien miteinander zu kombinieren.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung einer Sicherheitsvorrichtung;
- Fig. 2: eine schematische Darstellung einer Ausführungsumgebung der Sicherheitsvorrichtung;
- Fig. 3: eine schematische Darstellung einer Ausführungsumgebung in einer Ausführungsform mit einem Rechenknoten;
- Fig. 4: eine schematische Darstellung einer Ausführungsumgebung ähnlich Figur 3 nun mit zwei Rechenknoten zur Schaffung von Redundanz und Diversität;
- Fig. 5: eine schematische Darstellung einer Ausführungsumgebung ähnlich Figur 3 mit einer zusätzlichen Automatisierungseinheit; und
- Fig. 6: eine schematische Darstellung einer Ausführungsumgebung ähnlich Figur 3 in einer speziellen Ausführungsform unter Verwendung von Kubernetes.

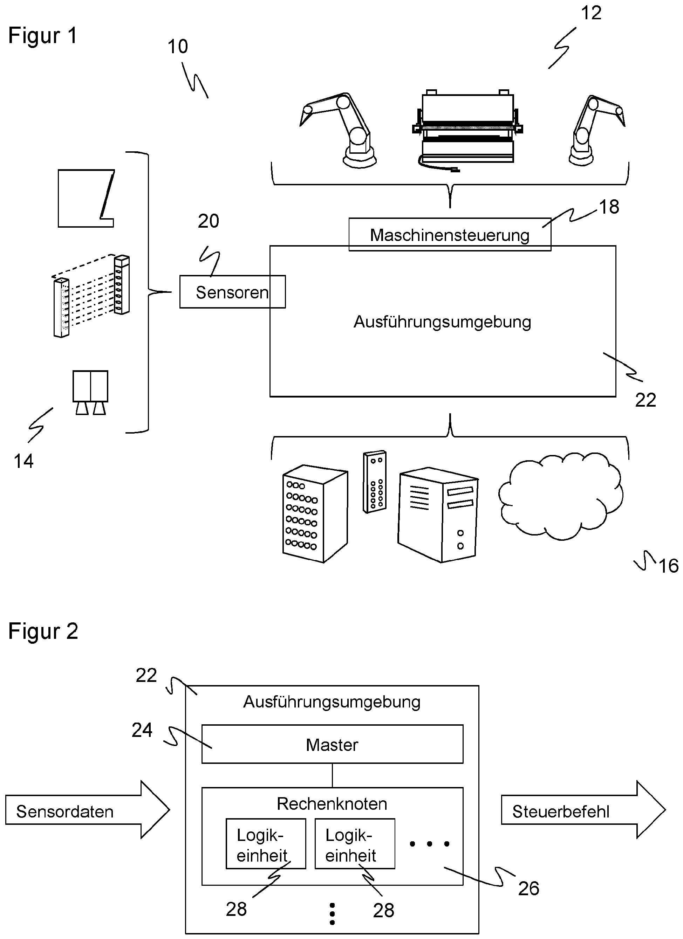

Figur 1 zeigt eine Übersichtsdarstellung einer Sicherheitsvorrichtung 10. Die Begriffe Sicherheit sowie sicher und nicht sicher sind weiterhin so zu verstehen, dass entsprechende Komponenten, Übertragungswege und Auswertungen die einleitend genannten Kriterien von Sicherheitsnormen erfüllen beziehungsweise nicht erfüllen.

Die Sicherheitsvorrichtung 10 lässt sich grob in drei Blöcke mit mindestens einer zu überwachenden Maschine 12, mindestens einem Sensor 14 zur Erzeugung von Sensordaten der überwachten Maschine 12 und mindestens einer Hardwarekomponente 16 mit Rechen- und Speicherressourcen für die Steuer- und Auswertungsfunktionalität zur Auswertung der Sensordaten und Auslösen einer etwaigen sicherheitsgerichteten Reaktion der Maschine 12 unterteilen. Maschine 12, Sensor 14 und Hardwarekomponente 16 werden im Folgenden manchmal im Singular und manchmal Plural angesprochen, was ausdrücklich die jeweils anderen Ausführungsformen mit nur einer jeweiligen Einheit 12, 14, 16 oder mehreren solchen Einheiten 12, 14, 16 einschließen soll.

An den Rändern sind jeweils Beispiele für die drei Blöcke dargestellt. Bei der vorzugsweise industriell eingesetzten Maschine 12 handelt es sich beispielsweise um eine Bearbeitungsmaschine, eine Fertigungsstraße, eine Sortieranlage, eine Prozessanlage, einen Roboter oder ein Fahrzeug, das schienengebunden sein kann oder nicht und insbesondere führerlos ist (AGC, Automated Guided Cart, AGV, Automated Guided Vehicle, AMR, Autonomous Mobile Robot).

Als beispielhafte Sensoren 14 sind ein Laserscanner, ein Lichtgitter und eine Stereokamera als Vertreter optoelektronischer Sensoren dargestellt, zu denen weitere Sensoren wie Lichttaster, Lichtschranken, FMVW-LIDAR oder Kameras mit jeglicher 2D- oder 3D-Erfassung zählen, wie Projektions- oder Lichtlaufzeitverfahren. Einige weiterhin nicht abschließende Beispiele für Sensoren 14 sind UWB-Sensoren, Ultraschallsensoren, Trägheitssensoren, kapazitive, magnetische oder induktive Sensoren, oder Prozessgrößensensoren, wie Temperatur-, Durchfluss-, Füllstand- oder Drucksensor. Diese Sensoren 14 können je nach Sicherheitsvorrichtung 10 in beliebiger Anzahl vorhanden sein und beliebig miteinander kombiniert werden.

Denkbare Hardwarekomponenten 16 sind Steuerungen (PLC, Programmable Logic Controller beziehungsweise SPS, speicherprogrammierbare Steuerung), ein Rechner in einem lokalen Netzwerk, insbesondere ein Edge-Device oder auch eine Cloud, und ganz allgemein jegliche Hardware, die Ressourcen für digitale Datenverarbeitung bereitstellt.

Im Inneren der Figur 1 sind die drei Blöcke nochmals aufgegriffen. Die Maschine 12 ist vorzugsweise über ihre Maschinensteuerung 18 mit der Sicherheitsvorrichtung 10 verbunden, wobei die Maschinensteuerung im Falle eines Roboters eine Robotersteuerung ist, im Falle eines Fahrzeugs eine Fahrzeugsteuerung, in einer Prozessanlage eine Prozesssteuerung und ähnlich für andere Maschinen 12. Die im Inneren als Block 20 zusammengefassten Sensoren 14 erzeugen nicht nur Sensordaten, sondern weisen auch eine nicht einzeln gezeigte Schnittstelle auf, um die Sensordaten in roher oder (vor)verarbeiteter Form auszugeben, sowie in aller Regel eine eigene Steuer- und Auswertungseinheit, also eine eigene Hardwarekomponente zur digitalen Datenverarbeitung.

Eine Ausführungsumgebung 22 ist ein zusammenfassender Begriff für eine Verarbeitungseinheit, welche unter anderem die Datenverarbeitung der Sensordaten leistet, um daraus Steuerbefehle an die Maschine 12 oder sonstige sicherheitsrelevante und weitere Informationen zu gewinnen. Die Ausführungsumgebung 22 ist auf den Hardwarekomponenten 16 implementiert und wird nachfolgend unter Bezugnahme auf die Figuren 2 bis 6 näher erläutert. Erfindungsgemäß ist nicht festgelegt, auf welcher Hardware die Ausführungsumgebung 22 ausgeführt wird. Die obige Auflistung möglicher Hardwarekomponenten nennt einige Beispiele, die beliebig kombinierbar sind. Ferner ist die Ausführungsumgebung 22 absichtlich mit Überlapp zu der Maschinensteuerung 18 und dem Block 20 der Sensoren 14 eingezeichnet, da auch interne Rechen- und Speicherressourcen der Sensoren 14 und/oder der Maschine 12 von der Ausführungsumgebung 22 genutzt werden können, wiederum in beliebiger Kombination einschließlich der Möglichkeit, dass es gar keine zusätzlichen Hardwarekomponenten 16 außerhalb der Maschine 12 und der Sensoren 14 gibt. Im Folgenden wird davon ausgegangen, dass die Hardwarekomponenten 16 die Rechen- und Speicherressourcen stellen, damit ist dann eine Einbeziehung interner Hardware von Maschine 12 und/oder Sensoren 14 mit gemeint.

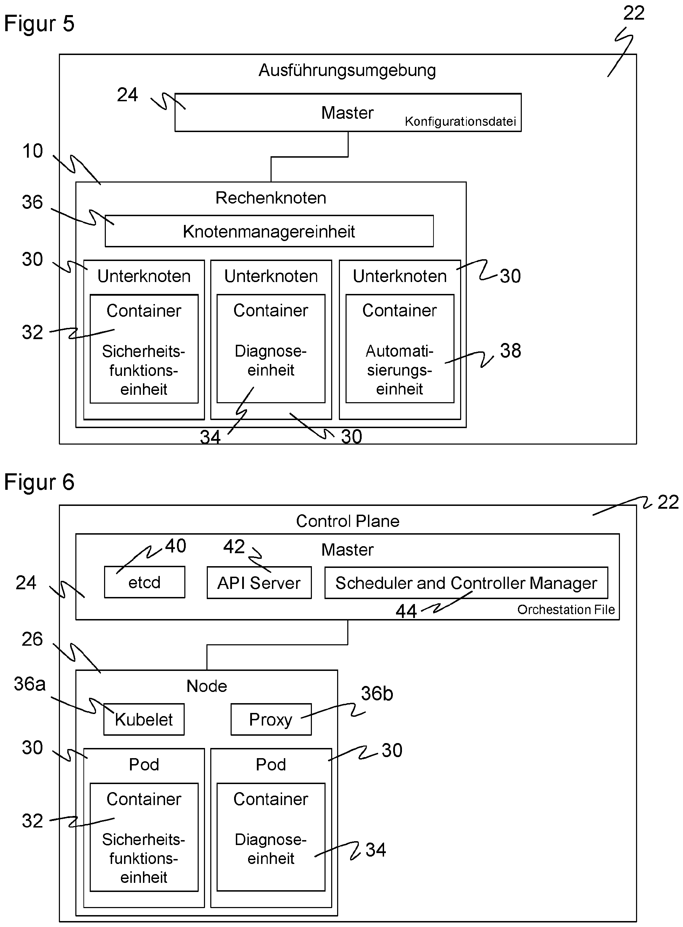

Die Sicherheitsvorrichtung 10 und insbesondere die Ausführungsumgebung 22 stellt nun Sicherheitsfunktionen und vorzugsweise auch Diagnosefunktionen bereit. Später unter Bezugnahme auf Figur 5 werden in Abgrenzung von Sicherheitsfunktionen, die auch als sichere Automatisierungsfunktionen bezeichnet werden, als weitere Option zusätzliche nicht sichere Automatisierungsfunktionen eingeführt. Eine solche Sicherheitsfunktion nimmt den Strom zeitlich aufeinanderfolgender Mess- und Ereignisinformationen mit den Sensordaten entgegen und erzeugt entsprechende Steuerungssignale und vorzugsweise auch Diagnose- oder Übersichtsinformationen.

Die Sicherheitsvorrichtung 10 erreicht eine hohe Verfügbarkeit und Robustheit gegenüber unvorhergesehenen internen wie externen Ereignissen, indem Sicherheitsfunktionen als Dienstleistung der Hardwarekomponenten 16 erbracht wird. Die flexible Zusammensetzung der Hardwarekomponenten 16 und vorzugsweise deren Vernetzung im lokalen oder nicht lokalen Netzwerk beziehungsweise in eine Cloud ermöglichen eine Redundanz und Leistungs-Elastizität, so dass sehr robust mit Unterbrechungen, Störungen und Anforderungsspitzen umgegangen werden kann. Die Sicherheitsvorrichtung 10 erkennt, sobald Fehler nicht mehr aufgefangen werden und damit sicherheitsrelevant werden, und leitet dann eine situationsgerechte Reaktion ein, mit der die Maschine 12 erforderlichenfalls in einen sicheren Zustand überführt wird. Dazu wird die Maschine 12 beispielsweise angehalten, verlangsamt, sie weicht aus oder arbeitet in einem ungefährlichen Modus. Es sei nochmals klargestellt, dass es zwei Klassen von Ereignissen gibt, die eine sicherheitsgerichtete Reaktion auslösen: zum einen ein als gefährlich eingestuftes Ereignis, das sich aus den Sensordaten ergibt, und zum anderen das Aufdecken eines sicherheitsrelevanten Fehlers.

Figur 2 zeigt eine schematische Darstellung der Ausführungsumgebung 22. Aufgabe der Ausführungsumgebung 22 ist letztlich, aus Sensordaten einen Steuerbefehl abzuleiten, insbesondere ein Sicherheitssignal, das eine sicherheitsgerichtete Reaktion der Maschine 12 auslöst. Die Ausführungsumgebung 22 weist einen Master 24 und mindestens einen Rechenknoten 26 auf. Die erforderliche Rechen- und Speicherkapazität für Master 24 und Rechenknoten 26 stellen die Hardwarekomponenten 16 bereit, die Ausführungsumgebung 22 kann sich transparent über eine Vielzahl von Hardwarekomponenten 16 erstrecken. Ein Rechenknoten 26 ist dabei abstrakt oder virtuell zu verstehen, es gibt nicht notwendig eine 1 :1-Beziehung zwischen einem Rechenknoten 26 und einer Hardwarekomponente 16, sondern eine Hardwarekomponente 16 kann mehrere Rechenknoten 26 bereitstellen oder umgekehrt ein Rechenknoten 26 auf mehrere Hardwarekomponenten 16 verteilt sein. Diese Verteilung gilt analog für den Master 24.

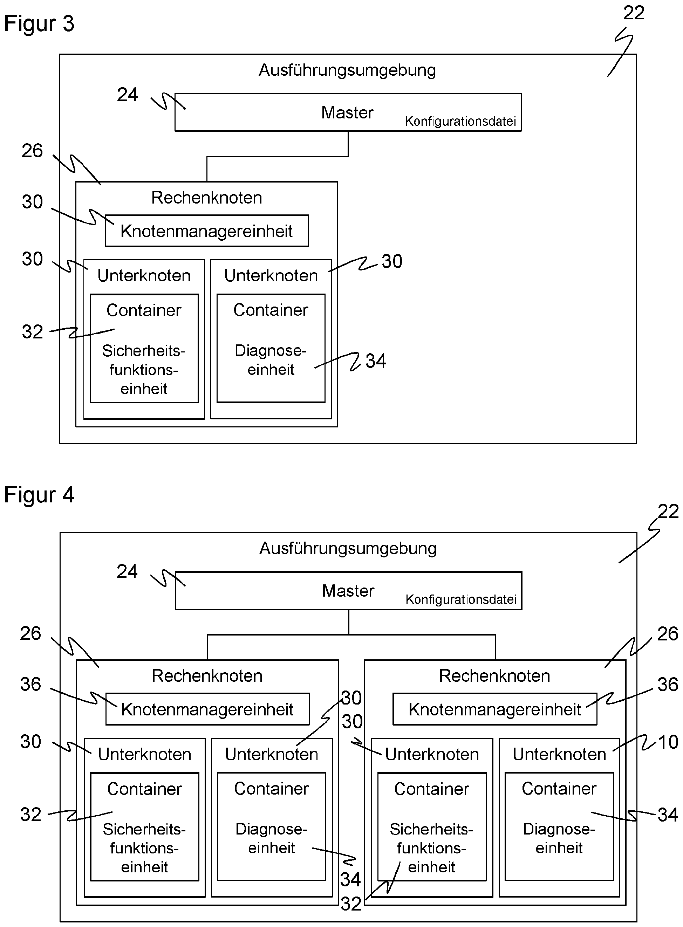

Ein Rechenknoten 26 weist eine oder mehrere Logikeinheiten 28 auf. Eine Logikeinheit 28 ist eine in sich abgeschlossene funktionale Einheit, die Informationen entgegennimmt, diese zusammenführt, transformiert, umgestaltet oder allgemein zu einer neuen Information verarbeitet und dann zur Visualisierung, als Steuerbefehl oder zur weiteren Verarbeitung möglichen Abnehmern zur Verfügung stellt, insbesondere weiteren Logikeinheiten 28 oder einer Maschinensteuerung 12. Im Rahmen dieser Beschreibung sind vornehmlich drei Arten von Logikeinheiten 28 zu unterscheiden, nämlich die unter Bezugnahme auf die Figur 3 eingeführten Sicherheitsfunktionseinheiten und Diagnoseeinheiten sowie die unter Bezugnahme auf die Figur 5 eingeführten Automatisierungseinheiten.

Die Ausführungsumgebung 22 aktiviert die jeweils benötigten Logikeinheiten 28 und sorgt für deren geordneten Betrieb. Hierzu weist sie den jeweiligen Logikeinheiten 28 die benötigten Ressourcen auf den zur Verfügung stehenden Rechenknoten 26 beziehungsweise Hardwarekomponenten 26 zu und überwacht die Aktivität sowie den Ressourcenbedarf aller Logikeinheiten 28. Vorzugsweise erkennt die Ausführungsumgebung 22, wenn eine Logikeinheit 28 nicht mehr aktiv ist oder es zu Unterbrechungen der Ausführungsumgebung 22 oder der Logikeinheit 28 kam. Sie versucht dann, die Logikeinheit 28 zu reaktivieren und erzeugt eine neue Kopie der Logikeinheit 28, wenn das nicht möglich ist, um so den geordneten Betrieb zu wahren.

Unterbrechungen können vorhergesehen wie unvorhergesehen sein. Beispielhafte Ursachen sind Fehler in der Infrastruktur, also den Hardwarekomponenten 16, deren Betriebssystem oder den Netzwerkverbindungen, weiterhin versehentliche Fehlbedienungen oder Manipulationen oder der vollständige Verbrauch der Ressourcen einer Hardwarekomponente 16. Kann eine Logikeinheit 28 alle erforderlichen, insbesondere sicherheitsrelevanten Informationen nicht oder jedenfalls nicht schnell genug verarbeiten, so kann die Ausführungsumgebung 22 zusätzliche Kopien der betroffenen Logikeinheit 28 erstellen, um so die Verarbeitung der Informationen weiter zu gewährleisten. Auf diese Weise sorgt die Ausführungsumgebung 22 dafür, dass die Logikeinheit 28 ihre Funktion mit einer erwarteten Qualität und Verfügbarkeit erbringt.

Figur 3 zeigt nochmals eine weitere, vorteilhaft ausdifferenzierte Ausführungsform der Ausführungsumgebung 22 der Sicherheitsvorrichtung 10. Der Master 24 bildet die Verwaltungs- und Kommunikationszentrale. Darin ist eine Konfigurationsinformation beziehungsweise Konfigurationsdatei über die vorhandenen Logikeinheiten 28 gespeichert, so dass der Master 24 die erforderlichen Kenntnisse über die Konfiguration hat, insbesondere welche Logikeinheiten 28 es gibt und geben soll, auf welchen Rechenknoten 26 sie zu finden sind und in welchem Zeitablauf sie Ressourcen erhalten und aufgerufen werden. Die Konfigurationsdatei ist bevorzugt über Signaturen gegen absichtliche und unabsichtliche Manipulationen abgesichert, beispielsweise über Blockchaintechnologien. Hier trifft sich die Sicherheitstechnik (Safety) vorteilhaft mit der Datenintegrität ((Cyber-)Security), denn auf diese Weise werden Angriffe abgewehrt oder jedenfalls erkannt, die unabsehbare Unfallfolgen nach sich ziehen könnten.

Die Rechenknoten 26 weisen vorteilhafterweise eine eigene Unterstruktur auf, wobei die nun beschriebenen Einheiten auch nur teilweise vorhanden sein können. Zunächst können Rechenknoten 26 nochmals in Unterknoten 30 unterteilt sein. Logikeinheiten 28 werden vorzugsweise erst innerhalb der Unterknoten 30 erzeugt, nicht bereits auf Ebene von Rechenknoten 26. bevorzugt sind Logikeinheiten 28 innerhalb von Containern virtualisiert, also containerisiert. Jeder Unterknoten 30 weist also einen oder mehrere Container mit vorzugsweise jeweils einer Logikeinheit 28 auf. Im Beispiel der Figur 3 gibt es zwei Logikeinheiten 28, nämlich eine Sicherheitsfunktionseinheit 32 und eine Diagnoseeinheit 34, jeweils in einem eigenen Container und auch Unterknoten 30. Abweichend wäre ebenso vorstellbar, die Sicherheitsfunktionseinheit 32 und Diagnoseeinheit 34 demselben Unterknoten 30 zuzuweisen.

Eine Knotenmanagereinheit 36 des Rechenknotens 26 koordiniert dessen Unterknoten 30 und die diesem Rechenknoten 26 zugewiesenen Logikeinheiten 28. Die Knotenmanagereinheit 36 kommuniziert ferner mit dem Master 24 sowie weiteren Rechenknoten 26. Die Verwaltungsaufgaben der Ausführungsumgebung 22 können praktisch beliebig auf den Master 24 und die Knotenmanagereinheit 36 verteilt werden, der Master also als verteilt implementiert angesehen werden. Vorteilhaft ist aber, wenn sich der Master um die globalen Aufgaben der Ausführungsumgebung 22 und jede Knotenmanagereinheit 36 um die lokalen Aufgaben des jeweiligen Rechenknotens 26 kümmert. Trotzdem kann der Master 24 vorzugsweise auf mehrere Hardwarekomponenten 16 verteilt oder redundant ausgebildet sein, um dessen Ausfallsicherheit zu erhöhen.

Eine Absicherungseinheit oder Sicherheitsfunktionseinheit 32 ist ein Beispiel für eine spezielle Logikeinheit 28 zur Auswertung von Sensordaten für eine Absicherungsaufgabe mit funktionaler Sicherheit. Typische Beispiele sind Abstandsüberwachungen (speziell Speed-and-Separation), Durchgangsüberwachung, Schutzfeldüberwachung oder Kollisionsvermeidung mit dem Ziel einer angemessenen sicherheitsgerichteten Reaktion der Maschine 12 im Gefahrenfall. Dies ist die Kernaufgabe der Sicherheitstechnik, wobei je nach Sensor 14 und Auswertungsverfahren verschiedenste Wege denkbar sind, zwischen einer normalen und einer gefährlichen Situation zu unterscheiden. Für jede Sicherheitsanwendung oder Gruppe von Sicherheitsanwendungen können passende Sicherheitsfunktionseinheiten 32 programmiert oder aus einem Pool vorhandener Sicherheitsfunktionseinheiten 32 ausgewählt werden.

Eine Diagnoseeinheit 34 ist ein weiteres Beispiel für eine spezielle Logikeinheit 28 und ebenfalls sicherheitsrelevant. Die Diagnoseeinheit 34 kann einfach sein, etwa als Watchdog, oder Tests und Diagnosen unterschiedlicher Komplexität durchführen. Als Logikeinheit 28 läuft sie in derselben Ausführungsumgebung 22 und wird nach deren gleichen Grundprinzipien betrieben, ebenso wie eine Sicherheitsfunktionseinheit 32. Sie ist in der Lage, sichere Algorithmen und Selbstüberwachungsmaßnahmen einer Sicherheitsfunktionseinheit 32 jedenfalls teilweise zu ersetzen oder zu ergänzen. Dazu überwacht die Diagnoseeinheit 34 analysiert jedoch die Aktivitäten der Sicherheitsfunktionseinheit 32 auf ihre Korrektheit, d.h. ob diese Sicherheitsfunktionseinheit 32 die ihr zugedachten Aktivitäten in der festgelegten Reihenfolge und in den zeitlichen Rahmenbedingungen ausführt. Die Ausführungsumgebung 22 prüft also lediglich, ob eine Sicherheitsfunktionseinheit 32 überhaupt noch aktiv ist, die Diagnoseeinheit 34 dagegen spezifisch, ob Reihenfolgen, Zeitfenster, Zeitpunkte und Inhalte der Aktivitäten korrekt sind, und deckt damit Fehler der Sicherheitsfunktionseinheit 32 auf. Dafür hat die Diagnoseeinheit 34 Erwartungen an die Ausgabe der Sicherheitsfunktionseinheit 32 zu bestimmten Zeiten, sei es in deren regulärem Betrieb oder in Antwort auf bestimmte als Test eingespeiste künstliche Sensorinformationen.

Durch den Einsatz der Ausführungsumgebung 22 wird es möglich, sicherheitsrelevante Logikeinheiten 28 praktisch beliebig auf eine auch stark heterogene Umgebung der Hardwarekomponenten 26 einschließlich eines Edge-Netzwerks oder einer Cloud zu verteilen. Die Ausführungsumgebung 22 ruft die erforderlichen Logikeinheiten 28 ins Leben, beendet sie oder verschiebt sie zwischen Rechenknoten 26 und Unterknoten 30.

Figur 4 zeigt eine weitere Ausführungsform der Ausführungsumgebung 22 der Sicherheitsvorrichtung 10. In Ergänzung zu der Ausführungsform nach Figur 3 sind hier Kopien von Sicherheitsfunktionseinheit 32 und Diagnoseeinheit 34 erzeugt. Dafür ist in diesem Beispiel auch ein weiterer Rechenknoten 26 vorhanden, das wäre aber nicht zwingend, da weitere Logikeinheiten auch im selben Rechenknoten 26 oder sogar Unterknoten 30 angelegt werden könnten. Die zusätzlichen Logikeinheiten 28 sind nicht für zusätzliche Funktionalität vorgesehen, obwohl das auch vorstellbar wäre, sondern um Redundanzen zu erzeugen. Dabei kann eine Diagnoseeinheit 34 jeweils einer Sicherheitsfunktionseinheit 32 desselben oder eines anderen Rechenknotens 26 ebenso wie desselben oder eines anderen Unterknoten 30 zugeordnet sein. Außerdem kann eine Diagnoseeinheit 34 eine Sicherheitsfunktionseinheit 32 alternativ eins zu eins überwachen, oder eine Diagnoseeinheit 34 ist für mehrere Sicherheitsfunktionseinheiten 32 zuständig oder umgekehrt sind mehrere Diagnoseeinheiten 34 für dieselbe Sicherheitsfunktionseinheit 32 zuständig. Mehrere Diagnoseeinheiten 34 können zudem bevorzugt ihre Diagnosen untereinander vergleichen.

Damit ermöglicht die Erfindung über eine Anpassung an eine heterogene Umgebung mit nahezu beliebigen Hardwarekomponenten 16 hinaus auch eine Skalierung des Sicherheitsniveaus (Safety Level, etwa Performance Class PC nach IEC/TS 62998, Performance Level nach ISO 13849 oder Safety Integrity Level SIL nach IEC 61508). Dafür gibt es drei Stellschrauben: Die Häufigkeit der Diagnose, also die Testzyklen, mit denen eine Diagnoseeinheit 34 eine Sicherheitsfunktionseinheit 32 überwacht, die Vielfachheit der Redundanz, also wieviele Kopien einer Sicherheitsfunktionseinheit 32 und/oder Diagnoseeinheit 34 aktiv sind, und die Diversität, also auf wieviele Rechenknoten 26 oder Unterknoten 30 die Sicherheitsfunktionseinheiten 32 und Diagnoseeinheiten 34 verteilt sind.

Damit ließe sich beispielhaft die nachfolgende Abstufung des Sicherheitsniveaus erzielen:
Niedriges Sicherheitsniveau: eine Sicherheitsfunktionseinheit 32 und eine Diagnoseeinheit 34 sind jeweils nur einmal instantiiert und laufen auf derselben Hardwarekomponente 16, insbesondere einem einzelnen Rechner, und die Diagnoseeinheit 34 prüft die Verarbeitungsergebnisse der Sicherheitsfunktionseinheit 32 nur in jedem n-ten Sensorzyklus, mit dem die Sensoren 14 Sensordaten bereitstellen beziehungsweise diese verarbeitet werden. Die Ausführungsumgebung 22 führt dazu insbesondere n-mal die Sicherheitsfunktionseinheit 32 und erst dann einmal die Diagnoseeinheit 34 aus. Dieses Vorgehen ähnelt einem sogenannten Test vor Anforderung.

Mittleres Sicherheitsniveau: weiterhin gibt es nurje eine Kopie der Sicherheitsfunktionseinheit 32 und Diagnoseeinheit 34. Allerdings ist die Häufigkeit der Diagnose erhöht, bis hin zu einer Überprüfung jedes Sensorzyklus', wo dann die Ausführungsumgebung die Diagnoseeinheit 34 jedes Mal nach der Sicherheitsfunktionseinheit 32 aufruft.

Hohes Sicherheitsniveau: Nun werden von der Ausführungsumgebung 22 jeweils zwei Instanzen der Sicherheitsfunktionseinheit 32 und der Diagnoseeinheit 34 erzeugt, die verschiedenen Unterknoten 30 oder besser noch Rechenknoten 26 und vorzugsweise damit auch Hardwarebausteinen 16 zugewiesen sind. Dies ergibt eine zweifache Redundanz und damit ein zweikanaliges System und zugleich eine mögliche Diversität. Die Diagnoseeinheiten 34 haben kurze Testzyklen, vorzugsweise denselben Zyklus wie die Sicherheitsfunktionseinheiten 32. Es ist denkbar, eine Kreuztestung vorzunehmen oder immer wieder einzustreuen, bei der eine Diagnoseeinheit 34 eine andere Kopie der Sicherheitsfunktionseinheit 32 überwacht, oder die Diagnosen der Diagnoseeinheiten 34 untereinander zu vergleichen.

Sehr hohes Sicherheitsniveau: Nun werden sogar mehr als zwei Kopien der Sicherheitsfunktionseinheit 32 und/oder der Diagnoseeinheit 34 erzeugt. Damit entsteht je nach konkreter Ausgestaltung ein mindestens dreikanaliges System oder allgemein eine k-fache Redundanz oder diversitäre Redundanz. Ansonsten gelten die Ausführungen zum hohen Sicherheitsniveau auch hier.

Die entsprechenden Anforderungen werden in der Konfigurationsdatei mitgeteilt beziehungsweise dort festgehalten. Dies kann gezielt von außen geschehen, um von Hand oder auf gesonderte Anforderung ein bestimmtes Sicherheitsniveau einzustellen. Besonders vorteilhaft ist eine situative Anpassung des Sicherheitsniveaus. Dabei stellt die Sicherheitsvorrichtung 10 fest, insbesondere mittels einer geeigneten Sicherheitsfunktionseinheit 32, wie die aktuelle Gefahrenlage anhand der Sensordaten und gegebenenfalls weiterer Informationen, insbesondere von der Maschinensteuerung 18 beispielsweise über einen bevorstehenden Arbeitsschritt, zu beurteilen ist. Diese situative oder kontextbezogene Risikoeinschätzung wird als "Behaviour Driven Risk Assessment" bezeichnet. Es kann besondere Ereignisse geben, die Einfluss auf ein angemessenes Sicherheitsniveau haben, wie die spezielle Anforderung einer Sicherheitsfunktion, das Abschließen eines Auftrags oder eine Wartungsanforderung. Über die geschilderten Anpassungen kann dann jeweils die Ausführungsumgebung das neue Sicherheitsniveau sogar dynamisch einstellen und erforderlichenfalls Logikeinheiten 28 ins Leben rufen, beenden oder zwischen Rechenknoten 26 oder Unterknoten 30 verschieben. Auch eine Optimierung anhand von Randbedingungen, wie einer erhöhten Prozess- oder Fertigungseffizienz ist vorstellbar.

Letzteres gilt insbesondere, wenn die Ausführungsumgebung nicht allein für die Sicherheit zuständig ist, sondern die Sensoren 14 auch für nicht sicherheitsrelevante Automatisierungsaufgaben nutzt. Eine entsprechende Ausführungsform der Ausführungsumgebung 22 zeigt die Figur 5. Dort kommt eine weitere Logikeinheit 28 hinzu, nämlich eine Automatisierungseinheit 38. Dabei sind einzelne oder mehrere Automatisierungseinheiten 38 mit beliebigen insbesondere zu den Figuren 3 und 4 erläuterten Ausführungsformen kombinierbar, die Figur 5 zeigt nur ein einfaches Beispiel mit jeweils einem Rechenknoten 26, einer Sicherheitsfunktionseinheit 32, einer Diagnoseeinheit 34 und einer Automatisierungseinheit 38.

Eine Automatisierungseinheit 38 ist eine Logikeinheit 28, die Sensoren 14 und Maschinen 12 oder Teile davon überwacht, allgemein Aktoren, und die basierend auf diesen Informationen (Teil-)Abläufe steuert oder Informationen darüber bereitstellt. Eine Automatisierungseinheit 38 wird von der Ausführungsumgebung im Prinzip behandelt wie jede Logikeinheit 28, und damit ist sie vorzugsweise ebenfalls containerisiert. Beispiele für Automatisierungsaufgaben sind Qualitätsprüfung, Variantensteuerung, Objekterkennung zum Greifen, Sortieren oder für sonstige Bearbeitungsschritte, Klassifikationen und dergleichen. Die Abgrenzung zu den sicherheitsrelevanten Logikeinheiten 28 besteht darin, dass eine Automatisierungseinheit 38 nicht zum Unfallschutz, d.h. der sicherheitstechnischen Anwendung beiträgt. Dementsprechend bedarf sie auch keiner Diagnoseeinheit 34. Ein verlässliches Arbeiten und eine gewisse Überwachung durch die Ausführungsumgebung 22 ist dennoch erwünscht, aber dies dient einer Erhöhung der Verfügbarkeit und damit der Produktivität und Qualität, nicht der Sicherheit.

Die Architektur der Ausführungsumgebung 22 erlaubt ein nahtloses Verschmelzen von Sicherheit und Automatisierung, da sicherheitsrelevante Logikeinheiten 32, 34 und Automatisierungseinheiten 38 in derselben Umgebung und praktisch simultan ausgeführt sowie gleichartig behandelt werden können. Im Falle eines Konflikts gibt die Ausführungsumgebung 22 vorzugsweise den sicherheitsrelevanten Logikeinheiten 32, 34 Priorität, etwa im Falle knapper Ressourcen. In der Konfigurationsdatei können Ausführungsregeln für die Koexistenz von sicherheitsrelevanten Logikeinheiten 32, 34 und Automatisierungseinheiten 38 berücksichtigt werden.

Figur 6 zeigt eine schematische Darstellung einer Ausführungsumgebung 22 in einer Ausführungsform unter Verwendung von Kubernetes. Die Ausführungsumgebung 22 wird hier control plane genannt. Die Figur 6 ist an die Figur 3 angelehnt, die weiteren unter Bezugnahme auf die Figuren 3 bis 5 erläuterten Ausführungsformen lassen sich analog in Kubernetes umsetzen. In Kubernetes besitzt der Master 24 eine Unterstruktur. Der (Kubernetes-)Master 24 ist nach wie vor nicht selbst für die Ausführung von Containern oder Logikeinheiten 28 zuständig, sondern kümmert sich um die allgemeinen Abläufe oder die Orchestrierung (orchestration layer). Dementsprechend wird die Konfigurationsdatei als orchestration file bezeichnet. Weiterhin sind eine Datenbank etcd 40 für alle relevanten Daten der Kubernetes-Umgebung, ein API-Server 42 als Schnittstelle zu Kubernetes sowie ein Scheduler and Controller Manager 44 vorhanden, der die eigentliche Orchestrierung vornimmt.

Die vorhandene Hardware wird in Nodes als Rechenknoten 26 unterteilt. In den Nodes wiederum gibt es einen oder mehrere sogenannte Pods als Unterknoten 30 und darin die Container mit den eigentlichen Micro-Services, in diesem Fall den Logikeinheiten 28 samt zugehöriger Containerlaufzeit (container runtime) und damit allen Bibliotheken und für die Logikeinheit 28 zur Laufzeit erforderlichen Abhängigkeiten. Das lokale Management leistet eine nun zweigeteilte Knotenmanagereinheit 36 mit einem sogenannten Kubelet 36a und einem Proxy 36b. Das Kubelet 36a ist ein Agent, der die eigenen Pods und Container des Nodes verwaltet. Der Proxy 36b wiederum enthält die Netzwerkregeln für die Kommunikation zwischen Nodes und mit dem Master.

Kubernetes ist eine bevorzugte, aber keineswegs die einzige Umsetzungsmöglichkeit für die Ausführungsumgebung 22. Als eine weitere Alternative unter mehreren wäre Docker Swarm zu nennen. Docker selbst ist keine direkte Alternative, sondern ein Werkzeug zum Erzeugen von Containern und somit sowohl mit Kubernetes als auch Docker Swarm kombinierbar, die dann die Container orchestrieren.

## Patentansprüche

1. Sicherheitsvorrichtung (10) zur Überwachung mindestens einer Maschine (12), die mindestens einen Sensor (14) zum Erzeugen von Sensordaten zu der Maschine (12) sowie eine mindestens mittelbar mit dem Sensor (14) und der Maschine (12) verbundene Verarbeitungseinheit für die Sensordaten aufweist, die als Ausführungsumgebung (22) mit mindestens einem Rechenknoten (26) sowie dafür ausgebildet ist, mindestens eine Logikeinheit (28) auf dem Rechenknoten (26) ablaufen zu lassen, wobei mindestens eine Logikeinheit (28) eine Sicherheitsfunktionseinheit (32) zur sicherheitsgerichteten Auswertung der Sensordaten umfasst, um im Falle eines sicherheitsrelevanten Ereignisses ein Sicherheitssignal an die Maschine (12) zum Auslösen einer Sicherheitsreaktion auszugeben,
**dadurch gekennzeichnet,**
**dass** die Verarbeitungseinheit weiterhin dafür ausgebildet ist, Logikeinheiten (28) zu erzeugen, aufzulösen und/oder einem Rechenknoten (26) zuzuweisen, wobei die Ausführungsumgebung (22) den jeweils benötigten Logikeinheiten (28) die benötigten Ressourcen auf den zur Verfügung stehenden Rechenknoten (26) zuweist und zum Erzeugen einer Sicherheitsfunktionseinheit (32) eine passende Sicherheitsfunktionseinheit (32) aus einem Pool vorhandener Sicherheitsfunktionseinheiten (32) ausgewählt wird.

2. Sicherheitsvorrichtung (10) nach Anspruch 1,
wobei mindestens eine Logikeinheit (28) als Diagnoseeinheit (34) ausgebildet ist, die eine Sicherheitsfunktionseinheit (32) testet oder überwacht.

3. Sicherheitsvorrichtung (10) nach Anspruch 1 oder 2,
wobei die Ausführungsumgebung (22) mindestens eine Mastereinheit (24) aufweist, die mit den Rechenknoten (26) kommuniziert und sie koordiniert.

4. Sicherheitsvorrichtung (10) nach einem der vorhergehenden Ansprüche, wobei die Ausführungsumgebung (22) dafür ausgebildet ist zu prüfen, ob eine Logikeinheit (28) noch arbeitet und/oder die einer Logikeinheit (28) zugewiesenen Ressourcen zu verändern.

5. Sicherheitsvorrichtung (10) nach einem der vorhergehenden Ansprüche, wobei die Ausführungsumgebung (22) eine Konfigurationsinformation über die Logikeinheiten (28) gespeichert hält, und wobei die Konfigurationsinformation insbesondere mittels Signaturen oder Blockchain-Datensätzen gegen Manipulation gesichert ist.

6. Sicherheitsvorrichtung (10) nach einem der vorhergehenden Ansprüche, wobei der mindestens eine Rechenknoten (26) eine Knotenmanagereinheit (36) zur Kommunikation mit anderen Rechenknoten (26) und der Ausführungsumgebung (22, 24) aufweisen und/oder wobei der mindestens eine Rechenknoten mindestens (26) einen Unterknoten (30) aufweist und die Logikeinheiten (28) einem Unterknoten (30) zugeordnet sind.

7. Sicherheitsvorrichtung (10) nach einem der vorhergehenden Ansprüche, wobei die mindestens eine Logikeinheit (28) als Container implementiert sind.

8. Sicherheitsvorrichtung (10) nach einem der vorhergehenden Ansprüche, wobei die Ausführungsumgebung (22) auf mindestens einem Sensor (14), einer speicherprogrammierbaren Steuerung, einer Maschinensteuerung (18), einer Rechnervorrichtung in einem lokalen Netzwerk, einen Edge-Device und/oder in einer Cloud implementiert ist
und/oder wobei die Ausführungsumgebung (22) dafür ausgebildet ist, Rechenknoten (26) einzubinden und/oder auszuschließen.

9. Sicherheitsvorrichtung (10) nach einem der vorhergehenden Ansprüche, wobei die Ausführungsumgebung (22) dafür ausgebildet ist, eine sicherheitsrelevante Logikeinheit (32, 34) zur Laufzeit dynamisch zu erzeugen, aufzulösen und/oder einem Rechenknoten (26) zuzuweisen.

10. Sicherheitsvorrichtung (10) nach einem der vorhergehenden Ansprüche, wobei eine Sicherheitsfunktionseinheit (32) dafür ausgebildet ist, dynamisch ein erforderliches oder erreichbares Sicherheitsniveau für die Sicherheitsvorrichtung (10) zu bestimmen.

11. Sicherheitsvorrichtung (10) nach einem der vorhergehenden Ansprüche, wobei die Ausführungsumgebung (22) dafür ausgebildet ist, das Sicherheitsniveau der Sicherheitsvorrichtung (10) dynamisch durch mindestens eine der Maßnahmen Änderung von Testzyklen, Änderung von Redundanz und/oder Änderung von Diversität anzupassen, insbesondere durch Änderung der Zeitpunkte, zu denen eine Diagnoseeinheit (34) eine Sicherheitsfunktionseinheit (32) testet oder überwacht, Änderung einer Anzahl der für die Ausführung einer Sicherheitsfunktion zuständigen Logikeinheiten (32, 34) und/oder Änderung der Unterknoten (30) oder Rechenknoten (26), auf denen eine für eine Sicherheitsfunktion zuständige Logikeinheit (32, 34) implementiert ist.

12. Sicherheitsvorrichtung (10) nach einem der vorhergehenden Ansprüche, wobei die Ausführungsumgebung (22) dafür ausgebildet ist, das Sicherheitsniveau der Sicherheitsvorrichtung (10) einzustellen auf:
- niedrig: eine Sicherheitsfunktion ist nur einfach in einer sicherheitsrelevanten Logikeinheit (32, 34) implementiert, eine Diagnose erfolgt nur mit jedem n-ten Sensorzyklus oder vor Anforderung,
- mittel: eine Sicherheitsfunktion ist nur einfach in einer sicherheitsrelevanten Logikeinheit (32, 34) implementiert, eine Diagnose erfolgt in kurzen Zyklen, insbesondere mit jedem Sensorzyklus,
- hoch: eine Sicherheitsfunktion ist redundant in zwei sicherheitsrelevanten Logikeinheiten (32, 34) implementiert, eine Diagnose erfolgt in kurzen Zyklen, insbesondere mit jedem Sensorzyklus, und die Diagnosen werden verglichen oder
- sehr hoch: eine Sicherheitsfunktion ist redundant in mindestens drei sicherheitsrelevanten Logikeinheiten (32, 34) implementiert, eine Diagnose erfolgt in kurzen Zyklen, insbesondere mit jedem Sensorzyklus, und die Diagnosen werden verglichen.

13. Sicherheitsvorrichtung (10) nach einem der vorhergehenden Ansprüche, wobei mindestens eine Logikeinheit (28) als Automatisierungseinheit (38) ausgebildet ist, die aus den Sensordaten eine für eine Automatisierungsaufgabe relevante Information und/oder einen Steuerungsbefehl für die Maschine (12) erzeugt, wobei Information und Steuerungsbefehl nicht sicherheitsrelevant sind.

14. Sicherheitsvorrichtung (10) nach einem der vorhergehenden Ansprüche, wobei der mindestens eine Sensor (14) als optoelektronischer Sensor, insbesondere Lichtschranke, Lichttaster, Lichtgitter, Laserscanner, FMCW LIDAR oder Kamera, als Ultraschallsensor, Trägheitssensor, kapazitiver Sensor, magnetischer Sensor, induktiver Sensor, UWB-Sensor oder als Prozessgrößensensor ausgebildet ist, insbesondere Temperatur-, Durchfluss-, Füllstand- oder Drucksensor, und wobei die Sicherheitsvorrichtung (10) insbesondere eine Vielzahl gleicher oder unterschiedlicher Sensoren (14) aufweist.

15. Sicherheitsverfahren zur Überwachung mindestens einer Maschine (12), bei dem mindestens ein Sensor (14) Sensordaten zu der Maschine (12) erzeugt und eine mindestens mittelbar mit dem Sensor (14) und der Maschine (12) verbundene Verarbeitungseinheit für die Sensordaten als Ausführungsumgebung (22) mindestens eine Logikeinheit (28) auf einem Rechenknoten (26) ablaufen lässt, wobei mindestens eine Logikeinheit (28) als Sicherheitsfunktionseinheit (32) die Sensordaten sicherheitsgerichtet auswerte, um im Falle eines sicherheitsrelevanten Ereignisses ein Sicherheitssignal an die Maschine (12) zum Auslösen einer Sicherheitsreaktion auszugeben,
**dadurch gekennzeichnet,**
**dass** die Verarbeitungseinheit Logikeinheiten (28) erzeugt, auflöst und/oder einem Rechenknoten (26) zuweist, wobei die Ausführungsumgebung (22) den jeweils benötigten Logikeinheiten (28) die benötigten Ressourcen auf den zur Verfügung stehenden Rechenknoten (26) zuweist und zum Erzeugen einer Sicherheitsfunktionseinheit (32) eine passende Sicherheitsfunktionseinheit (32) aus einem Pool vorhandener Sicherheitsfunktionseinheiten (32) ausgewählt wird.

## Claims

1. A safety device (10) for monitoring at least one machine (12), the safety device (10) comprising at least one sensor (14) for generating sensor data relating to the machine (12) and a processing unit for the sensor data, which processing unit is connected at least indirectly to the sensor (14) and to the machine (12) and is configured as a runtime environment (22) having at least one computing node (26) and running at least one logic unit (28) on the computing node (26), wherein at least one logic unit (28) comprises a safety function unit (32) for safety-related evaluation of the sensor data in order to output a safety signal to the machine (12) for triggering a safety response in case of a safety-relevant event,
**characterized in that** the processing unit is further configured to generate logic units (28), to resolve them and/or to allocate them to a computing node (26), the runtime environment (22) allocating the resources required on the available computing nodes (26) to the respectively required logic units (28), and a suitable safety function unit (32) being selected from a pool of existing safety function units (32) in order to generate a safety function unit (32).

2. The safety device (10) according to claim 1,
wherein at least one logic unit (28) is formed as a diagnostic unit (34) which tests or monitors a safety function unit (32).

3. The safety device (10) according to claim 1 or 2,
wherein the runtime environment (22) comprises at least one master unit (24) communicating with and coordinating the computing nodes (26).

4. The safety device (10) according to any of the preceding claims,
wherein the runtime environment (22) is configured to check whether a logic unit (28) is still operating and/or to change the resources allocated to a logic unit (28).

5. The safety device (10) according to any of the preceding claims,
wherein the runtime environment (22) stores configuration information about the logic units (28), and wherein the configuration information in particular is secured against manipulation by means of signatures or blockchain records.

6. The safety device (10) according to any of the preceding claims,
wherein the at least one computing node (26) comprises a node manager unit (36) for communicating with other computing nodes (26) and the runtime environment (22, 24) and/or wherein the at least one computing node (26) comprises at least one sub-node (30) and the logic units (28) are associated with a sub-node (30).

7. The safety device (10) according to any of the preceding claims, wherein the at least one logic unit (28) is implemented as a container.

8. The safety device (10) according to any of the preceding claims,
wherein the runtime environment (22) is implemented on at least one of a sensor (14), a programmable logic controller, a machine controller (18), a computing device in a local area network, an edge device, and/or in a cloud, and/or wherein the runtime environment (22) is configured to include and/or exclude computing nodes (26).

9. The safety device (10) according to any of the preceding claims,
wherein the runtime environment (22) is configured to dynamically generate, resolve and/or assign a safety-related logic unit (32, 34) to a computing node (26) at runtime.

10. The safety device (10) according to any of the preceding claims,
wherein a safety function unit (32) is configured to dynamically determine a required or achievable safety level for the safety device (10).

11. The safety device (10) according to any of the preceding claims,
wherein the runtime environment (22) is configured to dynamically adapt the safety level of the safety device (10) by at least one of changing test cycles, changing redundancy and/or changing diversity, in particular by changing the times at which a diagnostic unit (34) tests or monitors a safety function unit (32), changing a number of logic units (32, 34) responsible for executing a safety function and/or changing the sub-nodes (30) or computing nodes (26) on which a logic unit (32, 34) responsible for a safety function is implemented.

12. The safety device (10) according to any of the preceding claims,
wherein the runtime environment (22) is configured to adjust the safety level of the safety device (10) to:
- low: a safety function is only implemented once in a safety-related logic unit (32, 34), a diagnosis is only performed with every nth sensor cycle or on demand,
- medium: a safety function is only implemented once in a safety-related logic unit (32, 34), a diagnosis is performed in short cycles, in particular with each sensor cycle,
- high: a safety function is implemented redundantly in two safety-related logic units (32, 34), a diagnosis is performed in short cycles, in particular with each sensor cycle, and the diagnoses are compared or
- very high: a safety function is implemented redundantly in at least three safety-related logic units (32, 34), a diagnosis is performed in short cycles, in particular with each sensor cycle, and the diagnoses are compared.

13. The safety device (10) according to any of the preceding claims,
wherein at least one logic unit (28) is configured as an automation unit (38) which generates information relevant for an automation task and/or a control command for the machine (12) from the sensor data, wherein information and control command are not relevant for safety.

14. The safety device (10) according to any of the preceding claims,
wherein the at least one sensor (14) is configured as an optoelectronic sensor, in particular a light barrier, scanning light sensor, light grid, laser scanner, FMCW-LIDAR or camera, as an ultrasonic sensor, inertial sensor, capacitive sensor, magnetic sensor, inductive sensor, UWB sensor or as a process variable sensor, in particular a temperature sensor, flow rate sensor, filling level sensor or pressure sensor, and wherein the safety device (10) in particular comprises a plurality of identical or different sensors (14).

15. A safety method for monitoring at least one machine (12), wherein at least one sensor (14) generates sensor data relating to the machine (12) and wherein a processing unit for the sensor data configured as a runtime environment (22) and connected at least indirectly to the sensor (14) and to the machine (12) runs at least one logic unit (28) on a computing node (26), wherein at least one logic unit (28) evaluates the sensor data in a safety-related manner as a safety function unit (32) in order to output a safety signal to the machine (12) for triggering a safety response in case of a safety-relevant event,
**characterized in that** the processing unit generates logic units (28), resolves them and/or allocates them to a computing node (26), the runtime environment (22) allocating the resources required on the available computing nodes (26) to the respectively required logic units (28), and a suitable safety function unit (32) being selected from a pool of existing safety function units (32) in order to generate a safety function unit (32).

## Revendications

1. Dispositif de sécurité (10) pour surveiller au moins une machine (12), comprenant au moins un capteur (14) pour générer des données de capteur relatives à la machine (12) ainsi qu'une unité de traitement des données de capteur qui est reliée au moins indirectement au capteur (14) et à la machine (12) et qui est conçue comme environnement d'exécution (22) avec au moins un noeud de calcul (26) et destinée à faire fonctionner au moins une unité logique (28) sur le noeud de calcul (26), au moins une unité logique (28) comprenant une unité fonctionnelle de sécurité (32) pour l'évaluation sécurisée des données de capteur, afin d'émettre, en cas d'événement pertinent en termes de sécurité, un signal de sécurité vers la machine (12) pour déclencher une réaction de sécurité,
**caractérisé en ce que**
l'unité de traitement est en outre réalisée pour créer des unités logiques (28), les supprimer et/ou les attribuer à un noeud de calcul (26), l'environnement d'exécution (22) attribue aux unités logiques respectives requises (28) les ressources requises sur les noeuds de calcul disponibles (26), et pour créer une unité fonctionnelle de sécurité (32), une unité fonctionnelle de sécurité appropriée (32) est sélectionnée dans un pool d'unités fonctionnelles de sécurité existantes (32).

2. Dispositif de sécurité (10) selon la revendication 1,
dans lequel au moins une unité logique (28) est réalisée comme une unité de diagnostic (34) qui teste ou surveille une unité fonctionnelle de sécurité (32).

3. Dispositif de sécurité (10) selon la revendication 1 ou 2,
dans lequel l'environnement d'exécution (22) comprend au moins une unité maître (24) qui communique avec les noeuds de calcul (26) et qui les coordonne.

4. Dispositif de sécurité (10) selon l'une des revendications précédentes, dans lequel l'environnement d'exécution (22) est réalisé pour vérifier si une unité logique (28) fonctionne encore et/ou pour modifier les ressources attribuées à une unité logique (28).

5. Dispositif de sécurité (10) selon l'une des revendications précédentes, dans lequel l'environnement d'exécution (22) maintient en mémoire une information de configuration concernant les unités logiques (28), et l'information de configuration est sécurisée contre toute manipulation, en particulier au moyen de signatures ou de jeux de données de chaîne de blocs.

6. Dispositif de sécurité (10) selon l'une des revendications précédentes, dans lequel ledit au moins un noeud de calcul (26) présente une unité de gestion de noeud (36) pour la communication avec d'autres noeuds de calcul (26) et avec l'environnement d'exécution (22, 24), et/ou ledit au moins un noeud de calcul (26) présente au moins un sous-noeud (30), et les unités logiques (28) sont associées à un sous-noeud (30).

7. Dispositif de sécurité (10) selon l'une des revendications précédentes, dans lequel ladite au moins une unité logique (28) est mise en oeuvre sous forme de conteneur.

8. Dispositif de sécurité (10) selon l'une des revendications précédentes, dans lequel l'environnement d'exécution (22) est mis en oeuvre sur au moins un capteur (14), un automate programmable industriel, un contrôleur de machine (18), un dispositif informatique dans un réseau local, un dispositif d'accès (dit edge-device) et/ou dans un nuage,
et/ou l'environnement d'exécution (22) est réalisé pour inclure et/ou exdure des noeuds de calcul (26).

9. Dispositif de sécurité (10) selon l'une des revendications précédentes, dans lequel l'environnement d'exécution (22) est réalisé pour créer dynamiquement en cours de fonctionnement une unité logique (32, 34) pertinente en termes de sécurité, pour la supprimer et/ou pour l'attribuer à un noeud de calcul (26).

10. Dispositif de sécurité (10) selon l'une des revendications précédentes, dans lequel une unité fonctionnelle de sécurité (32) est réalisée pour déterminer dynamiquement un niveau de sécurité requis ou réalisable pour le dispositif de sécurité (10).

11. Dispositif de sécurité (10) selon l'une des revendications précédentes, dans lequel l'environnement d'exécution (22) est réalisé pour adapter dynamiquement le niveau de sécurité du dispositif de sécurité (10) par au moins l'une des mesures suivantes : modification des cycles de test, modification de la redondance et/ou modification de la diversité, en particulier par modification des moments auxquels une unité de diagnostic (34) teste ou surveille une unité fonctionnelle de sécurité (32), modification d'un nombre d'unités logiques (32, 34) responsables de l'exécution d'une fonction de sécurité et/ou modification des sous-noeuds (30) ou des noeuds de calcul (26) sur lesquels une unité logique (32, 34) responsable d'une fonction de sécurité est mise en oeuvre.

12. Dispositif de sécurité (10) selon l'une des revendications précédentes, dans lequel l'environnement d'exécution (22) est réalisé pour régler le niveau de sécurité du dispositif de sécurité (10) à :
- faible : une fonction de sécurité n'est mise en oeuvre que de manière simple dans une unité logique (32, 34) pertinente en termes de sécurité, un diagnostic n'est effectué qu'à chaque n^{ième} cycle de capteur ou avant exigence,
- moyen : une fonction de sécurité n'est mise en oeuvre que de manière simple dans une unité logique (32, 34) pertinente en termes de sécurité, un diagnostic est effectué dans des cycles courts, en particulier à chaque cycle de capteur,
- élevé : une fonction de sécurité est mise en oeuvre de manière redondante dans deux unités logiques (32, 34) pertinentes en termes de sécurité, un diagnostic est effectué dans des cycles courts, en particulier à chaque cycle de capteur, et les diagnostics sont comparés, ou
- très élevé : une fonction de sécurité est mise en oeuvre de manière redondante dans au moins trois unités logiques (32, 34) pertinentes en termes sécurité, un diagnostic est effectué dans des cycles courts, en particulier à chaque cycle de capteur, et les diagnostics sont comparés.

13. Dispositif de sécurité (10) selon l'une des revendications précédentes, dans lequel au moins une unité logique (28) est réalisée comme une unité d'automatisation (38) qui génère, à partir des données de capteur, une information pertinente pour une tâche d'automatisation et/ou une instruction de commande pour la machine (12), l'information et l'instruction de commande n'étant pas pertinentes en termes de sécurité.

14. Dispositif de sécurité (10) selon l'une des revendications précédentes, dans lequel ledit au moins un capteur (14) est réalisé comme un capteur optoélectronique, en particulier comme une barrière lumineuse, un détecteur photoélectrique, une grille lumineuse, un scanner laser, un LIDAR FMCW ou une caméra, comme un capteur à ultrasons, un capteur inertiel, un capteur capacitif, un capteur magnétique, un capteur inductif, un capteur UWB ou comme un capteur de grandeur de processus, en particulier un capteur de température, de débit, de niveau de remplissage ou de pression, et le dispositif de sécurité (10) comprend en particulier une pluralité de capteurs (14) identiques ou différents.

15. Procédé de sécurité pour surveiller au moins une machine (12), dans lequel au moins un capteur (14) génère des données de capteur relatives à la machine (12), et une unité de traitement des données de capteur, reliée au moins indirectement au capteur (14) et à la machine (12) et faisant office d'environnement d'exécution (22), fait fonctionner au moins une unité logique (28) sur un noeud de calcul (26), au moins une unité logique (28) faisant office d'unité fonctionnelle de sécurité (32) évalue les données de capteur de façon sécurisée, afin d'émettre, en cas d'événement pertinent en termes de sécurité, un signal de sécurité vers la machine (12) pour déclencher une réaction de sécurité,
**caractérisé en ce que**
l'unité de traitement crée des unités logiques (28), les supprime et/ou les attribue à un noeud de calcul (26), l'environnement d'exécution (22) attribue aux unités logiques respectives requises (28) les ressources requises sur les noeuds de calcul disponibles (26), et pour créer une unité fonctionnelle de sécurité (32), une unité fonctionnelle de sécurité appropriée (32) est sélectionnée dans un pool d'unités fonctionnelles de sécurité existantes (32).
